# EUROPÄISCHE PATENTSCHRIFT

(11) **EP 0 651 938 B1**
(45) Veröffentlichungstag und Bekanntmachung des Hinweises auf die Patenterteilung: **03.03.1999**
(21) Anmeldenummer: 94117321.3
(22) Anmeldetag: 03.11.1994
(51) Int. Cl.: A01D 78/10

(54) **Heuwerbungsmaschine**
Hay making machine
Machine de fenaison

(30) Priorität: 06.11.1993 DE 9316973 U
(43) Veröffentlichungstag der Anmeldung: 10.05.1995
(73) Patentinhaber: H. Niemeyer Söhne GmbH & Co. KG, D-48466 Hörstel (DE)
(72) Erfinder: Schäfers, Theo, D-48477 Hörstel (DE); Ungruh, Josef, D-48429 Rheine (DE); Wisserodt, Eberhard, Dr., D-48369 Saerbeck (DE)

(56) Entgegenhaltungen:
- EP-A- 0 296 666
- EP-A- 0 534 127
- DE-U- 9 015 320
- DE-U- 9 100 715
- DE-U- 9 111 676
- US-A- 4 206 816

## Beschreibung

Die Erfindung betrifft eine Heuwerbungsmaschine, insbesondere Kreiselzettwender, in einer Ausbildung gemäß dem Oberbegriff des Anspruchs 1.

Aus dem DE-G 87 16 698.4 ist eine derartige Maschine nach dem Oberbegriff des Anspruchs 1 bekannt. Sie besteht im wesentlichen aus sechs um Hochachsen drehbaren Kreiselrechen, die an einem Querträger abgestützt sind. Zwei mittlere Kreiselrechen sind mit einem an einen Traktor anhäng- oder anbaubaren Mittelträger verbunden. Beidseits des Mittelträgers sind jeweils zwei weitere, untereinander gelenkig verbundene Seitenträger mit je einem weiteren Kreiselrechen gelenkig mit dem Mittelträger verbunden. Die Seitenträger werden aus einer Betriebsstellung in eine Transportstellung jeweils um 90° zum Nachbarträger geklappt. Die äußersten Seitenträger werden jeweils durch am Mittelträger angebrachte Stellstangen in ihre Transportstellung gebracht, während die dem Mittelträger benachbarten Seitenträger durch hydraulische Stellzylinder geschwenkt werden.

Eine Maschine gemäß dem Oberbegriff des Anspruchs 1 ist auch aus der EP 0 534 122 A1 bekannt. Bei dieser Maschine werden die jeweils äußersten Kreisel jeder Maschinenhälfte in Transportstellung nach hinten geklappt. Dazu werden die dem Mittelträger benachbarten ersten Seitenträger und die diesen benachbarten zweiten Seitenträger jeweils um etwa horizontale fahrtrichtungsparallele Achsen aufwärts und die den Seitenträgern benachbarten dritten Seitenträgern jeweils um etwa vertikale Klappachsen nach hinten geklappt.

Diese Art der Verringerung der Transportbreite der Maschine funktioniert gut, solange die Kreiseldurchmesser der Kreiselrechen nicht zu groß werden.

Aufgabe der Erfindung ist es, eine Heuwerbungsmaschine, insbesondere Kreiselzettwender, mit großer Arbeitsbreite zu schaffen, deren Kreiselrechen mit baulich einfachen Mitteln und ohne großen Bedienungsaufwand in eine kompakte Transportstellung verschwenkbar sind, so daß sie leicht transportierbar ist.

Die Erfindung löst diese Aufgabe mit den Merkmalen des kennzeichnenden Teils des Anspruchs 1. Hinsichtlich weiterer Ausgestaltungen der Erfindung wird auf die Ansprüche 2 bis 19 verwiesen.

Bei einer Heuwerbungsmaschine nach der Erfindung schwenken die Seitenträger jeder Maschinenhälfte mit den dazu gehörenden Kreiselrechen um Schwenkachsen aufwärts in eine Transportstellung, wobei die Schwenkachsen der Seitenträger der einen bzw. der anderen Maschinenhälfte derart zueinander verdreht angeordnet sind, daß in Transportstellung zumindest einer der jeweils äußersten Seitenträger mit der durch die Kreiselachsen der Kreiselrechen definierten, quer zur Fahrtrichtung verlaufenden Ebene, einen spitzen Winkel bildet. Dadurch werden alle Seitenträger der einen Maschinenhälfte gegenüber den Seitenträger der anderen Maschinenhälfte zur Transportstellung so verschwenkt, daß zumindest die äußersten Kreiselrechen der einen Maschinenhälfte hinter den äußersten Kreiselrechen der anderen Maschinenhälfte angeordnet sind. Die Winkelstellung richtet sich im wesentlichen nach dem Durchmesser der Kreiselrechen. Auf diese vorteilhafte Weise sind Heuwerbungsmaschinen mit sechs oder mehr Kreiselrechen großen Durchmessers in eine kompakte Transportstellung überführbar, die sowohl eine geringe Maschinenbreite, als auch eine geringe Maschinenhöhe aufweist.

In einer Ausführungsform nach der Erfindung ist es ebenfalls in vorteilhafter Weise möglich, daß beispielsweise die Schwenkachse eines äußersten Seitenträgers einer Maschinenhälfte zu einem innen benachbarten Seitenträger sowohl zu einer Ebene lotrecht zu den Kreiselachsen der Kreiselrechen als auch zu einer quer zur Fahrtrichtung verlaufenden Ebene, welche durch die Drehachsen der am Mittelträger abgestützten Kreiselrechen definiert ist, einen spitzen Winkel bildet. Dadurch ist die Schwenkachse räumlich angeordnet und der einzuschwenkende äußerste Seitenträger mit dem damit verbundenen Zinkenkreisel kann auf einfache Weise in eine den Gegebenheiten optimal angepaßte Ebene geschwenkt werden.

Auf diese einfache Art können große Arbeitsbreiten der Maschine verwirklicht werden, ohne auf eine in Transportbreite und -höhe mit günstiger Schwerpunktlage kompakte Maschine verzichten zu müssen.

Der Schwenkbereich des äußersten Seitenträgers mit Kreiselrechen liegt vorzugsweise bis 90° zu seinem benachbarten Seitenträger, während der äußerste Seitenträger der anderen Maschinenhälfte vorzugsweise um etwa 90° oder mehr zu seinem benachbarten Seitenträger schwenkt.

Die Seitenträger der Maschine werden nach der Erfindung in vorteilhafter Weise durch hydraulische Stellzylinder in ihre Transportstellung geschwenkt. Dabei ist für jede Maschinenhälfte ein hydraulischer Stellzylinder vorgesehen, der mit seinem einen Ende am Mittelträger der Maschine angreift und an seinem anderen Ende am äußersten Seitenträger. Dadurch wird mit einfachen Mitteln der gesamte Schwenkbereich der jeweils zu einer Maschinenhälfte gehörenden Seitenträger durchgeführt. Die Stellzylinder sind dabei bevorzugt so parallel geschaltet, daß die Schwenkung der Seitenträger gleichzeitig durchgeführt wird. Dies ist zeitsparend.

Die dem Mittelträger benachbarten Seitenträger werden in der aufgeklappten Transportstellung durch Rasten automatisch verriegelt. Dies schützt die Seitenträger vor unkontrollierten Bewegungen, die gefährlich werden könnten. Sollen die Kreiselrechen in Arbeitsstellung und damit die Seitenträger abgeklappt werden, können die Riegel beispielsweise durch Seilzug vom Traktor aus betätigt werden, was zum Bedienungskomfort beiträgt.

In der endgültigen Transportstellung werden die äußersten Seitenträger durch Stützen, Anschläge o.ä. zusätzlich abgestützt, so daß sie durch ihr Eigengewicht sicher in dieser Stellung gehalten werden. Dies trägt zur Sicherheit bei und entlastet die hydraulischen Stellzylinder während des Transports.

Um beispielsweise bei einem achtkreiseligen Kreiselzettwender eine kompakte Transportstellung zu erreichen, ist es nach der Erfindung möglich, die äußersten Kreiselrechen so anzuordnen, daß, ausgehend von der Transportstellung der sechskreiseligen Ausführung, der äußerste Seitenträger der einen Maschinenhälfte um eine weitere Schwenkachse in eine etwa lotrechte Ebene nach unten geklappt wird, während der in Fahrtrichtung vordere äußerste Kreiselrechen um eine neben dem Nachbarkreisel nach außen angeordnete Schwenkachse um etwa 180° unter den Nachbarseitenträger geschwenkt wird. Auf diese einfache und vorteilhafte Weise ist die Arbeitsbreite des Kreiselzettwenders weiter zu erhöhen, ohne die Transportabmessungen der Maschine wesentlich zu vergrößern. Der Schwenkvorgang wird vorzugsweise durch zusätzliche hydraulische Stellzylinder gesteuert.

Um Traktoren mit geringem Hubvermögen des Dreipunktgestänges zum Gerät die Arbeit mit Maschinen mit großer Arbeitsbreite zu ermöglichen, sieht die Erfindung wahlweise vor, die Maschine mit einer Aufsatteleinrichtung auszurüsten. Hierzu werden hinter den Tragrahmen der Maschine beispielsweise ein oder zwei vorzugsweise luftbereifte Laufräder angeordnet, die z.B. parallelogrammgeführt sind und über hydraulische Stellzylinder durch die Traktorhydraulik steuerbar sind. Während der Arbeit der Maschine werden die Laufräder vorzugsweise angehoben, so daß sie das Erntegut nicht überfahren. Das oder die Laufräder sind pendelnd angeordnet, um die Manövrierfähigkeit der Maschine zu erhöhen. Wahlweise können auch automatisch gesteuerte Laufräder Verwendung finden.

Weitere Einzelheiten und Vorteile ergeben sich aus der nachfolgenden Beschreibung und den Zeichnungen, in denen Ausführungsbeispiele der Erfindung schematisch, angenähert maßstäblich dargestellt sind. Es zeigen:
- Fig. 1 -: Einen sechskreiseligen Kreiselzettwender in einer Draufsicht in Arbeitsstellung.
- Fig. 2 -: Einen Kreiselzettwender nach Fig. 1 in einer Seitenansicht, bei dem die äußeren Kreiselrechen in Transportstellung angehoben sind.
- Fig. 3 -: Ein weiteres Ausführungsbeispiel eines Kreiselzettwenders in einer Ansicht in Fahrtrichtung in Arbeitsstellung.
- Fig. 4 -: Einen Kreiselzettwender gemäß Fig. 3 in einer Seitenansicht, bei dem die äußeren Kreiselrechen in Transportstellung angehoben sind.
- Fig. 5 -: Einen Kreiselzettwender gemäß Fig. 4 in einer Ansicht in Fahrtrichtung, bei dem die äußeren Kreiselrechen in Transportstellung angehoben sind.
- Fig. 6 -: Eine Einzelheit X in Fig. 3 in vergrößertem Maßstab.
- Fig. 7 -: Eine Detailansicht A in Fig. 6.
- Fig. 8 -: Eine Detailansicht B in Fig. 6.
- Fig. 9 -: Eine Prinzipskizze für ein weiteres Ausführungsbeispiel.
- Fig. 10 -: Einen achtkreiseligen Kreiselzettwender in einer Ansicht in Fahrtrichtung in Arbeitsstellung.
- Fig. 11 -: Ein Detail Y in Fig. 10 in vergrößertem Maßstab.
- Fig. 12 -: Einen Kreiselzettwender gemäß Fig. 10 in einer Seitenansicht, bei dem die äußeren Kreiselrechen in Transportstellung angehoben sind.
- Fig. 13 -: Einen Kreiselzettwender gemäß Fig. 12 in einer Ansicht in Fahrtrichtung.
- Fig. 14 -: Einen Kreiselzettwender gemäß Fig. 13 mit Laufrollen in Transportstellung in einer Seitenansicht.
- Fig. 15 -: Einen Kreiselzettwender gemäß Fig. 10 mit Laufrollen in einer Seitenansicht in Arbeitsstellung.

Als Ausführungsbeispiel einer Heuwerbungsmaschine nach der Erfindung ist ein Kreiselzettwender schematisch dargestellt. Auf die Darstellung unwesentlicher Details wurde verzichtet. Der Kreiselzettwender ist über ein Dreipunktgestänge (2) mit einem Traktor (1) verbunden. Der geräteseitige Anbaubock (3) ist in Arbeitsstellung der Maschine um eine Hochachse (4) schwenkbar, so daß sie sich bei der Arbeit in Fahrtrichtung (F) zum Traktor (1) frei bewegen kann.

Der Tragrahmen (5) verbindet den Anbaubock (3) mit einem Querträger (6), der sich aus einem Mittelträger (7) und beidseits gelenkig miteinander verbundenen Seitenträgern (8,9;10,11) zusammensetzt. Am Mittelträger (7) sind zwei Kreiselrechen (12,13) befestigt, während mit den Seitenträgern (8,9) jeweils die Kreiselrechen (14,15) und mit den Seitenträgern (10,11) jeweils die Kreiselrechen (16,17) verbunden sind. Jeder Kreiselrechen tastet bei der Arbeit über ein Stützrad (18) die Bodenunebenheiten ab und steuert damit die Zinken (19) in der Höhe. Die Kreiselrechen (12,13,14,15,16,17) drehen bei der Arbeit paarweise gegenläufig und werden über eine nicht dargestellte Gelenkwelle vom Traktor (1) angetrieben.

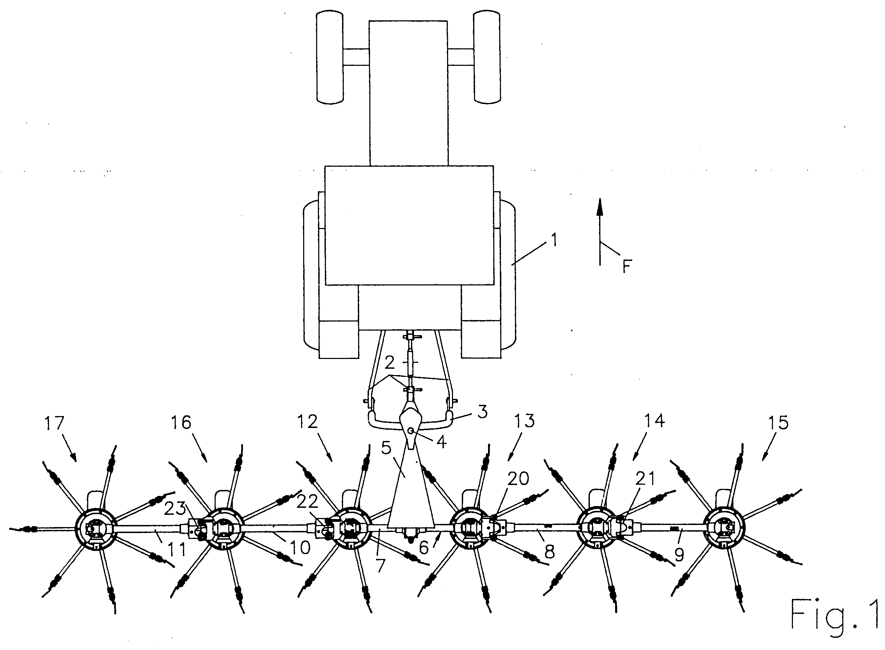

In Fig. 1 ist als Ausführungsbeispiel ein sechskreiseliger Kreiselzettwender in einer Draufsicht dargestellt, bei dem die Seitenträger (8,9,10,11) mit den dazu gehörenden Kreiselrechen (14,15,16,17) in abgeklappter Arbeitsstellung sind. Die Kreiselachsen der Kreiselrechen (12,13,14, 15,16,17) sind in der Fig. 1 senkrecht dargestellt, während sie bei der Arbeit der Maschine in Fahrtrichtung (F) geneigt sind. Die Schwenkachsen (20,21;22,23)) der Seitenträger (8,9;10,11) liegen in fahrtrichtungsparallelen, lotrecht zur Fahrbahnebene ausgerichteten Ebenen, die Schwenkachsen (22,23) sind jedoch gegenüber den Schwenkachsen (20,21) so verdreht zueinander angeordnet, daß die Seitenträger (10,11) in Transportstellung zu einer im wesentlichen aufrechten, quer zur Fahrtrichtung verlaufenden Ebene (24), welche durch die Kreiselachse der Kreiselrechen (12,13) des Mittelträgers definiert ist, einen spitzen Winkel (α) bilden.

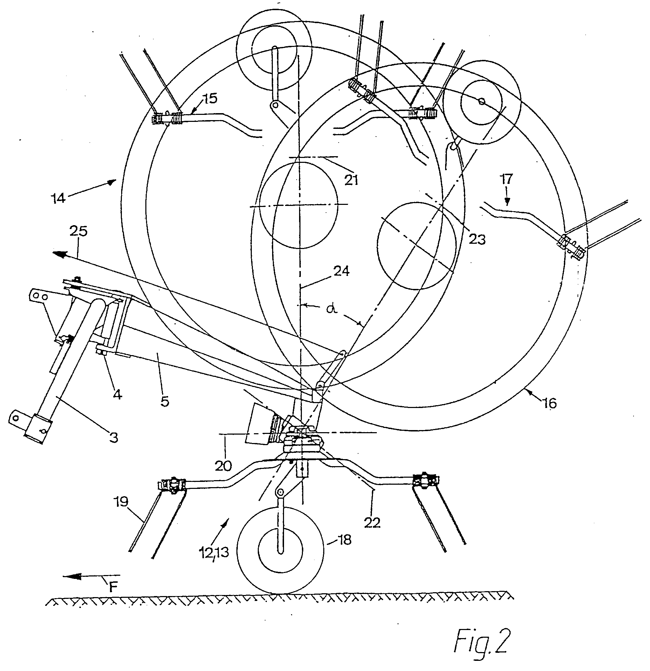

In Fig. 2 ist der Kreiselzettwender nach Fig. 1 in einer Seitenansicht in geklappter Transportstellung der Seitenträger (8,9;10,11) schematisch dargestellt, wobei die mittleren Kreiselrechen (12,13) in vorgeklappter Arbeitsstellung auf dem Boden stehend gezeigt werden. Auf die Darstellung des Traktors (1) und des Dreipunktgestänges (2) wurde verzichtet.

Zum Klappen der Kreiselrechen (14,15;16,17) in die Transportstellung wird mit den hydraulischen Stellzylindern (32,33) zunächst der Kreiselrechen (15) mit dem Seitenträger (9) um die Schwenkachse (21) und der Kreiselrechen (17) mit dem Seitenträger (11) um die Schwenkachse (23) gleichzeitig jeweils um etwa 90° zu den benachbarten Seitenträgern (8,10) hochgeklappt. Dann klappt mit dem gleichen Hub der Kreiselrechen (14) mit dem Seitenträger (8) um die Schwenkachse (20) und der Kreiselrechen (16) mit dem Seitenträger (10) um die Schwenkachse (22) ebenfalls jeweils um etwa 90° zu dem benachbarten Mittelträger (7) nach oben, wobei die äußersten Kreiselrechen (15,17) zueinander eine vorbestimmte Stellung einnehmen, damit sie sich an der Überlappungsstelle nicht berühren. Durch den Winkelversatz der Schwenkachsen der beiden Maschinenhälften zueinander wird der äußerste Kreiselrechen (17) der einen Maschinenhälfte hinter den äußersten Kreiselrechen (15) der anderen Maschinenhälfte geklappt. Dies ergibt eine besonders kompakte Transportstellung. Sie ist von den Durchmessern der Kreiselrechen weitgehend unabhängig. Lediglich der Winkel (α) wird von den Kreiselrechendurchmessern beeinflußt. In dieser hochgeklappten Transportstellung sind die Seitenträger (8,10) automatisch durch eine mechanische Vereitelung (26) verriegelt als zusätzliche Transportsicherung.

Um die Maschinen wieder in die Arbeitsstellung abzuklappen, muß diese Verriegelung (26) durch Betätigen eines Zuseils (25) vom Traktor (1) aus entriegelt werden.

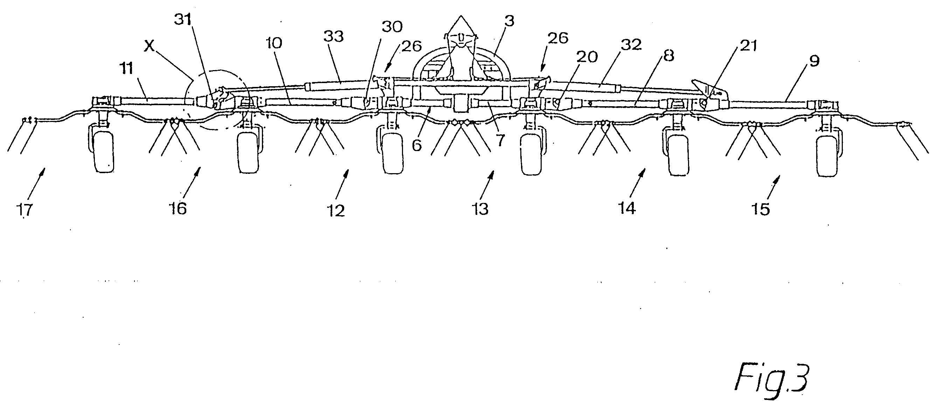

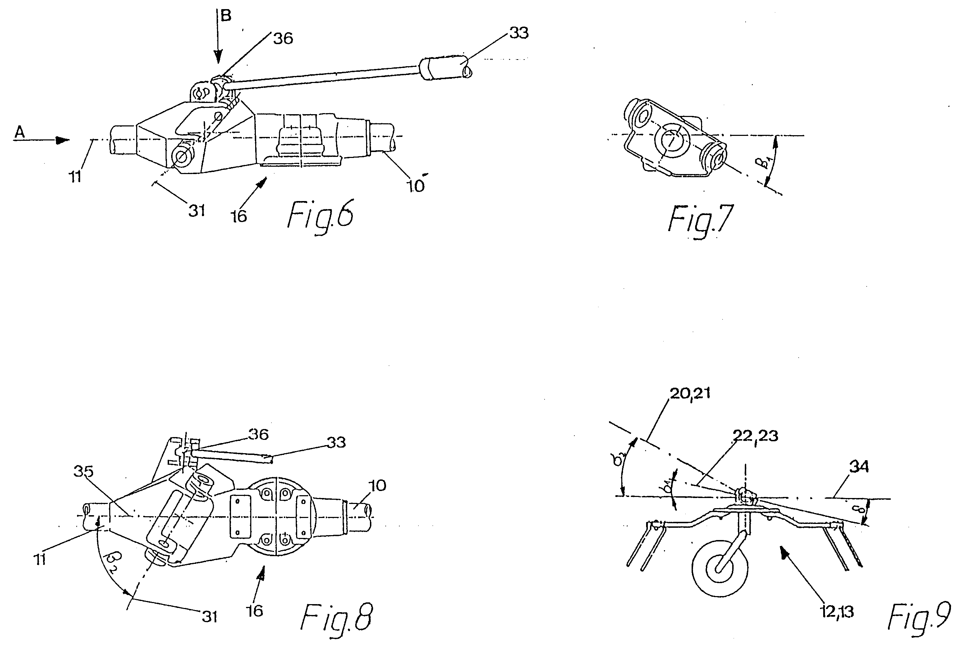

Ein weiteres Ausführungsbeispiel nach der Erfindung zeigen die Fig. 3 bis Fig. 8. In Fig. 3 ist ein sechskreiseliger Kreiselzettwender in einer Ansicht in Fahrtrichtung (F) dargestellt, bei dem die Schwenkachsen für das Schwenken der Kreiselrechen in die Transportstellung so angeordnet sind, daß die Schwenkachsen (20,21,30) gleichgerichtet sind, während die Schwenkachse (31) des äußersten Seitenträgers (11) mit dem Kreiselrechen (17) einen spitzen Winkel (β₁) (Fig. 7) zur Ebene (34), lotrecht zu den Kreiselachsen der Kreiselrechen, sowie zu einer Ebene (35), welche durch die Kreiselachsen der Kreiselrechen (16,17) definiert ist, quer zur Fahrtrichtung (F) einen spitzen Winkel (β₂) (Fig. 8) bildet, so daß die Schwenkachse (31) räumlich angeordnet ist. Die Einzelheit X (Fig. 3) in Fig. 6 veranschaulicht dies in vergrößertem Maßstab.

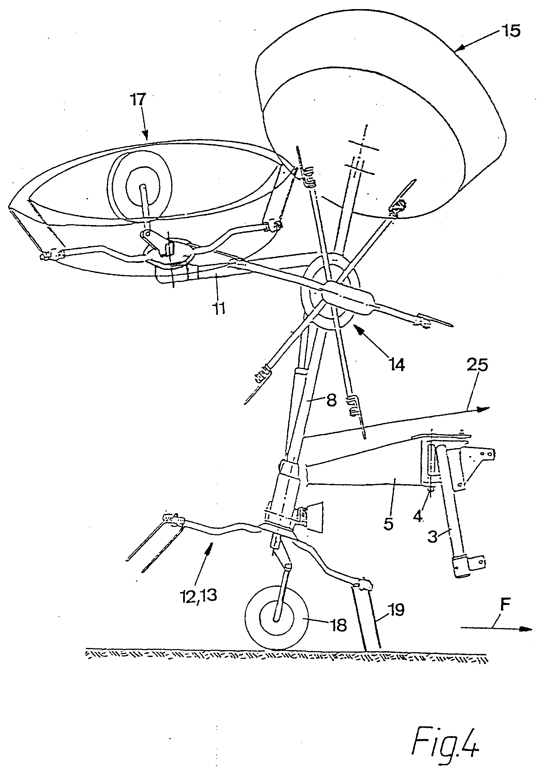

Fig. 4 zeigt eine Seitenansicht der Maschine aus Fig. 3 in einer hochgeklappten Transportstellung der Seitenträger. Die mittleren Kreiselrechen (12,13) sind mit ihren Kreiselachsen noch in Arbeitsstellung in Fahrtrichtung (F) geneigt.

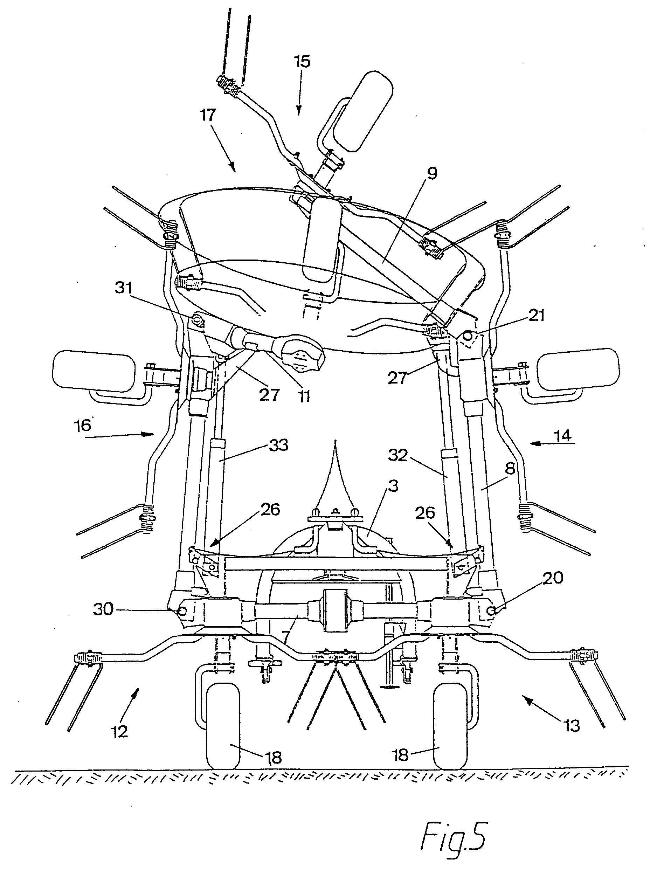

In Fig. 5 wird die Maschine nach Fig. 3 in der Transportstellung in einer Ansicht in Fahrtrichtung (F) dargestellt. Die äußeren Kreiselrechen (14,15) mit den Seitenträgern (8,9) der einen Maschinenhälfte und die Kreiselrechen (16,17) mit den Seitenträgern (10,11) der anderen Maschinenhälfte werden zum Erreichen der Transportstellung durch die Stellzylinder (32,33) angehoben. Sie schwenken zunächst die Kreiselrechen (15,17) um die Schwenkachsen (21,31) gegen Stützen (27) etwa in die Senkrechte, während bei Weiterbetätigung der Stellzylinder (32,33) der Kreiselrechen (14) mit dem Seitenträger (8) um die Schwenkachse (20) und der Kreiselrechen (17) mit dem Seitenträger (10) um die Schwenkachse (30) um etwa 90° in die Senkrechte schwenkt. Durch die räumliche Anordnung der Schwenkachse (31) wird der äußerste Seitenträger (11) bei diesem Vorgang im wesentlichen hinter die übrigen Seitenträger geschwenkt. Dies hat beispielsweise den Vorteil, daß der Gesamtschwerpunkt der Maschine nahe beim Traktor verbleibt und dadurch auch leistungsschwächere Traktoren dieses Gerät mit dem Dreipunktgestänge anheben können.

Während des Hochklappens rasten beide Seitenträger (8,10) automatisch in eine mechanische Verriegelung (26) ein, wodurch eine zusätzliche Transportsicherung zur Wirkung kommt. Vor dem Ablassen der Seitenträger mit den Kreiselrechen in die Arbeitsstellung wird durch das Zugseil (25) die Verriegelung (26) vom Traktorsitz aus gelöst. In den Fig. 3 und Fig. 5 ist die Maschine so dargestellt, daß die Kreiselachsen der mittleren Kreiselrechen (12,13) vertikal stehen.

Fig. 6 zeigt die Einzelheit X (Fig. 3) in vergrößertem Maßstab. Wegen der räumlichen Anordnung der Schwenkachse (31) ist der Anschluß des Stellzylinders (33) am Seitenteil (11) beispielsweise durch ein Kugelgelenk (36) vorgesehen, um die Bewegungsfreiheiten sicherzustellen. Das gleiche gilt für den Anschluß des Stellzylinders (33) am Mittelträger (7).

Fig. 7 stellt eine Ansicht in Richtung A nach Fig. 6 dar.

Fig. 8 zeigt die Einzelheit X (Fig. 3) in einer Ansicht B nach Fig. 6.

Fig. 9 zeigt die Prinzipskizze eines weiteren Ausführungsbeispiels, bei dem die Schwenkachsen (22,23) für die Seitenträger (10,11) der einen Maschinenhälfte mit einer Ebene (34), lotrecht zur Kreiselachse der Kreiselrechen einen sich in Fahrtrichtung (F) öffnenden Winkel (σ₁) einer ersten Größe und die Schwenkachsen (20,21) für die Seitenträger (8,9) der anderen Maschinenhälfte mit der Ebene (34) einen gleichgerichteten Winkel (σ₂) einer zweiten Größe oder einen sich in Gegenfahrtrichtung öffnenden Winkel (σ) einschließt. Dadurch besteht in vorteilhafter Weise die Möglichkeit, die Schwenkachsen zur Kreiselachse der Kreiselrechen in beliebiger Weise nach vorne oder hinten anzuordnen, um eine möglichst günstige Gesamtschwerpunktslage der Maschine zu erhalten.

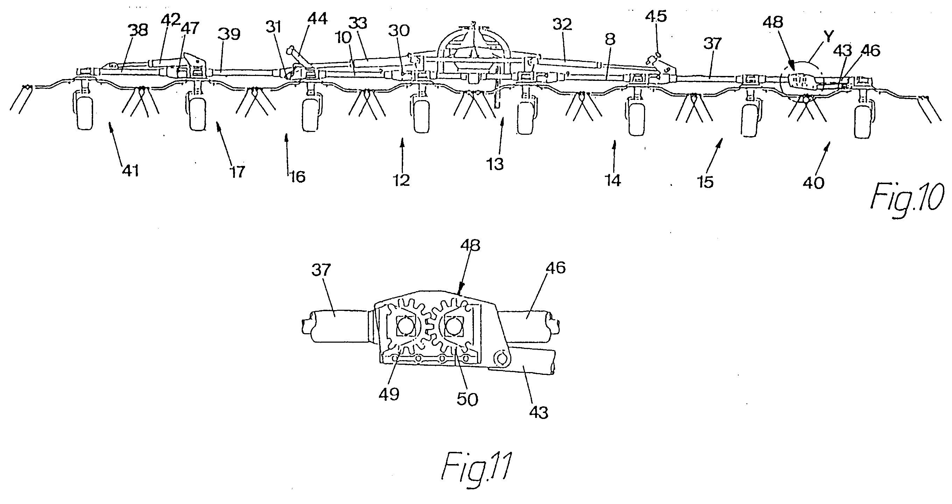

In Fig. 10 ist ein weiteres Ausführungsbeispiel nach der Erfindung dargestellt, und zwar ein achtkreiseliger Kreiselzettwender in einer Ansicht in Fahrtrichtung. Es handelt sich im wesentlichen um die Erweiterung des sechskreiseligen Kreiselzettwenders nach Fig. 3 um zwei weitere Kreiselrechen, um die Arbeitsbreite der Maschine weiter zu erhöhen. Dazu werden die Seitenträger (37,39) über die Kreiselrechen (15,17) hinaus verlängert und der Seitenträger (39) mit einer der Schwenkachse (30) parallelen Schwenkachse (47) versehen, während zur Maschinenmitte hin der Seitenträger (39) eine Schwenkachse (31) besitzt, die räumlich angeordnet ist. Wenn nun die Maschine in Transportstellung gebracht wird, werden die Stellzylinder (42,43) vom Traktorsitz aus betätigt, wodurch der Seitenträger (38) mit dem Kreiselrechen (41) in eine zu seinem Nachbarseitenträger (39) um etwa 90° geschwenkte Lage einnimmt. Auf der anderen Seite der Maschine ist der Seitenträger (37) über den Kreiselrechen (15) hinaus bis zur Gelenkverbindung (48) verlängert, die die Verbindung zwischen dem Seitenträger (37) und dem Seitenträgerteil (46) herstellt. Bei der Betätigung des Stellzylinders (43) wird das äußerste Seitenträgerteil (46) mit dem Kreiselrechen (40) um etwa 180° über seinen Nachbarseitenträger (37) geschwenkt. Werden die Stellzylinder (32,33) vom Traktorsitz aus betätigt, schwenken die übrigen Seitenträger (8,10,37,39) bis zu einstellbaren Anschlägen (44,45) in ihre endgültige Transportposition.

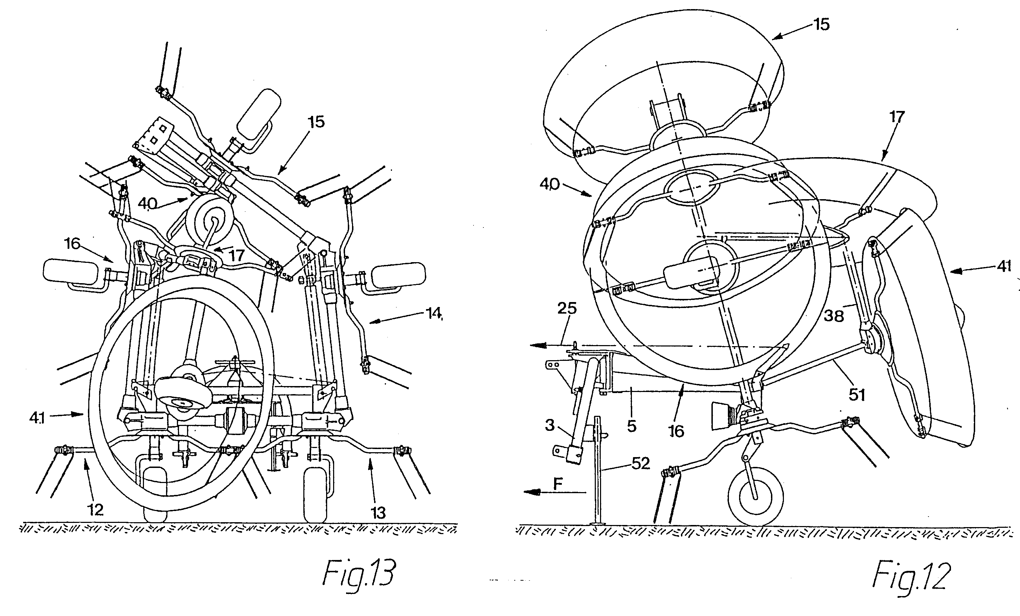

Fig. 11 zeigt die Gelenkverbindung (48) mit den Zahnsegmenten (49,50) in vergrößerter Darstellung. Die Bewegung zum Einschwenken des Seitenträgerteils (46) mit dem Kreiselrechen (40) wird durch den Stellzylinder (43) eingeleitet. Dabei rollt das Zahnsegment (50) mit dem Seitenträger (46) auf dem Zahnsegment (49) ab und bewegt damit den Kreiselrechen (40) in die eingeklappte Stellung.

Fig. 12 stellt die Maschine nach Fig. 10 in einer Seitenansicht in der eingeklappten Transportstellung dar. Wie oben schon beschrieben, werden die Seitenträger (8,10) während des Klappvorganges automatisch mechanisch verriegelt durch die Verriegelung (26). Sie wird durch Betätigen des Zugseils (25) beim Ablassen der Kreiselrechen außer Eingriff gebracht. Der äußerste Kreiselrechen (41) kann durch eine zusätzliche Stütze (51) für den Transport am Tragrahmen (5) abgestützt werden, um den Stellzylinder (42) zu entlasten. Fig. 12 zeigt ferner eine höhenverstellbare Abstellstütze (52) für das Abstellen der Maschine beim Abbau vom nicht dargestellten Traktor (1).

Fig. 13 stellt die Maschine gemäß Fig. 12 in einer Ansicht in Fahrtrichtung (F) dar, wobei die Maschine in eine senkrechte Kreiselachsenposition geschwenkt ist. Trotz der großen Arbeitsbreite ist der achtkreiselige Kreiselzettwender in eine außerordentlich kompakte Transportstellung geschwenkt, so daß er ohne Probleme als Dreipunktgerät transportiert werden kann.

Für Traktoren mit geringem Leistungsvermögen sieht die Erfindung vor, daß der Kreiselzettwender wahlweise mit einer vom Traktorsitz aus hydraulisch zu betätigenden Aufsatteleinrichtung ausrüstbar ist, die den Transport der Maschine für diese Fälle erleichtert.

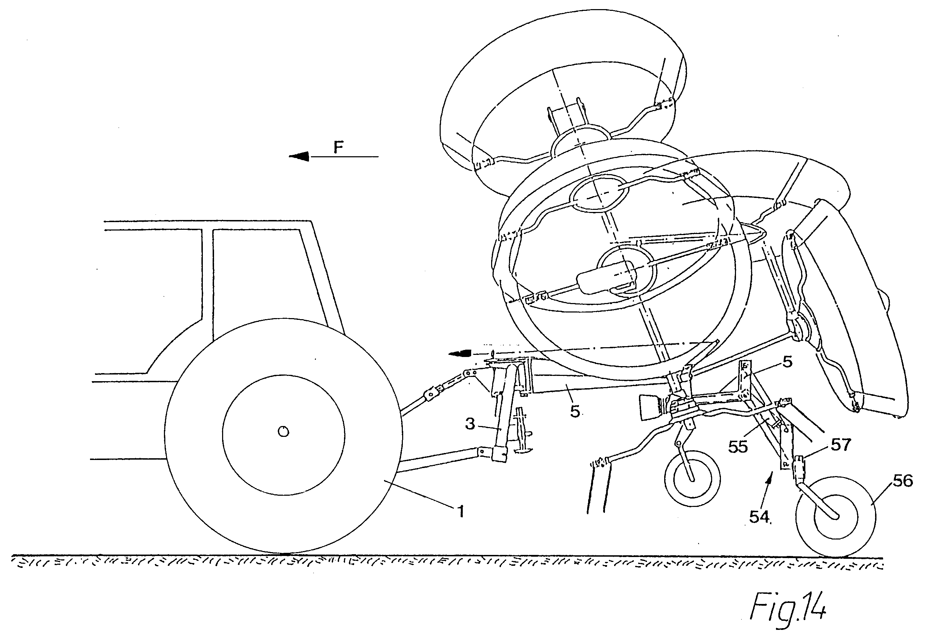

In Fig. 14 ist der achtkreiselige Kreiselzettwender mit der Aufsattelvorrichtung in Transportstellung dargestellt. Sie besteht im wesentlichen aus einem oder mehreren Auslegern (53), die fest mit dem Tragrahmen (5) verbunden sind. Am Ausleger (53) ist ein Parallelogramm (54) schwenkbeweglich befestigt, das durch einen hydraulischen Stellzylinder (55) geschwenkt wird. Am hinteren Ende des Parallelogramms (54) ist ein Laufrad (56) um eine Hochachse (57) schwenkbeweglich angeordnet. Je nach Verhältnissen können ein oder mehrere Laufräder (56) eingesetzt werden.

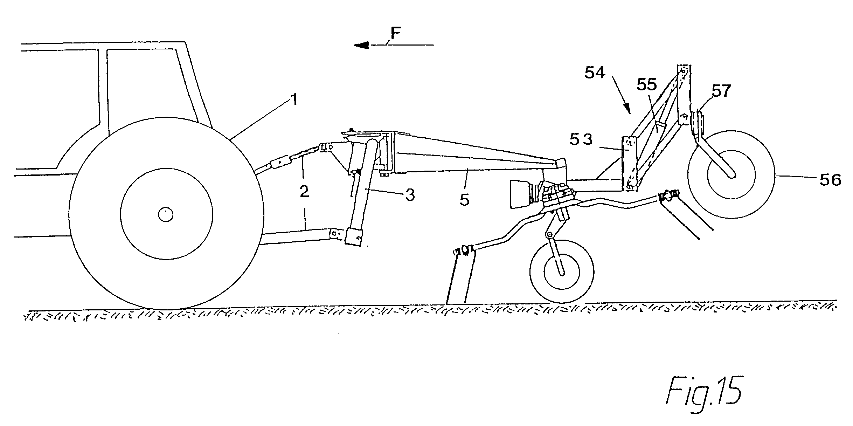

Die Prinzipskizze in Fig. 15 zeigt das Laufrad (56) in Arbeitsposition des Kreiselzettwenders, wobei das Laufrad (56) durch den Stellzylinder (55) in eine ausgehobene Stellung geschwenkt und gehalten wird, damit es bei der Arbeit des Kreiselzettwenders nicht über das Erntegut rollt.

## Patentansprüche

1. Heuwerbungsmaschine, insbesondere Kreiselzettwender, mit mindestens sechs um Hochachsen drehbaren Kreiselrechen (12,13,14,15,16,17), die an einem Querträger (6) abgestützt sind, der einen an einem Traktor (1) anhäng- oder anbaubaren Mittelträger (7) mit zwei mittleren Kreiselrechen (12,13) und an diesen beidseits angelenkte weitere, untereinander gelenkig verbundene Seitenträger (8,9,10,11) mit je einem weiteren Kreiselrechen (14,15,16,17) umfaßt, wobei die Seitenträger (8,9,10,11) aus ihrer Betriebsstellung aufwärts in eine, die Maschinenbreite verringernde Transportstellung klappbar sind, dadurch gekennzeichnet, daß zumindest die Schwenkachsen (20,22) der dem Mittelträger benachbarten Seitenträger (10,11) untereinander einen Winkel (α) einschließen.

2. Heuwerbungsmaschine nach Anspruch 1, dadurch gekennzeichnet, daß die Schwenkachsen (20,21) der dem Mittelträger benachbarten Seitenträger (8,9) der ersten Maschinenhälfte in fahrtrichtungsparallelen Ebenen verlaufen und die Schwenkachsen (20,21) der zweiten Maschinenhälfte derart zu den Schwenkachsen (20,21) der ersten Maschinenhälfte winkelig angeordnet sind daß zumindest einer der jeweils äußersten Seitenträger (9,11) mit einer ersten Ebene (24), welche durch die Drehachsen der am Mittelträger (7) abgestützten Kreiselrechen (12,13) definiert ist, einen spitzen winkel (α) bildet.

3. Heuwerbungsmaschine nach Anspruch 2, dadurch gekennzeichnet, daß die Schwenkachsen (22,23) für die Seitenträger (10,11) der ersten Maschinenhälfte mit einer zweiten Ebene (34), welche senkrecht zur ersten Ebene (24) ausgerichtet ist, einen sich in Fahrtrichtung (F) öffnenden Winkel (σ₁) einer ersten Größe und die Schwenkachsen (20,21) für die Seitenträger (8,9) der anderen Maschinenhälfte mit der zweiten Ebene (34) einen gleichgerichteten Winkel (σ₂) einer zweiten Größe oder einen sich in Gegenfahrtrichtung öffnenden Winkel (δ) einschließen.

4. Heuwerbungsmaschine nach Anspruch 2, dadurch gekennzeichnet, daß die Schwenkachsen (20,21) für die Seitenträger (8,9) der einen Maschinenhälfte in einer Ebene (34) verlaufen und zumindest die Schwenkachse (23) des äußersten Seitenträgers (11) der anderen Maschinenhälfte mit der Ebene (34) einen Winkel (σ₁) einschließt.

5. Heuwerbungsmaschine nach Anspruch 4, dadurch gekennzeichnet, daß die Schwenkachse (31) eines äußersten Seitenträgers (11) zu der Schwenkachse (30) seines innen benachbarten Seitenträgers (10) sowohl zur Ebene (34) als auch zu einer quer zur Fahrtrichtung verlaufenden Ebene (35) einen spitzen Winkel (β₁,β₂) bildet.

6. Heuwerbungsmaschine nach Anspruch 4, dadurch gekennzeichnet, daß die Schwenkachse (31) eines äußersten Seitenträgers (11) zu der Schwenkachse (30) seines innen benachbarten Seitenträgers (10) derart ausgerichtet ist, daß in Transportstellung der äußerste Seitenträger (11) den äußersten Seitenträger (9) der anderen Maschinenhälfte hintergreift.

7. Heuwerbungsmaschine nach einem der Ansprüche 1 bis 6, dadurch gekennzeichnet, daß in Transportstellung zumindest ein äußerster Seitenträger (11) unter etwa 90° zu seinem nächstinneren Seitenträger (10) verläuft.

8. Heuwerbungsmaschine nach einem der Ansprüche 1 bis 7, dadurch gekennzeichnet, daß hydraulische Stellzylinder (32,33) zum Schwenken der Seitenträger (8,9;10,11) einerseits am Mittelträger (7) und andererseits an Seitenträgern (9,11) angreifen.

9. Heuwerbungsmaschine nach einem der Ansprüche 1 bis 8, dadurch gekennzeichnet, daß zum Aushub der Seitenträger (8,9;10,11) auf jeder Maschinenhälfte nur ein Stellzylinder (32,33) vorgesehen ist.

10. Heuwerbungsmaschine nach Anspruch 8 oder 9, dadurch gekennzeichnet, daß die hydraulischen Stellzylinder (32,33) so parallel geschaltet sind, daß die Seitenträger (8,9;10,11) beider Maschinenhälften gleichzeitig anhebbar sind.

11. Heuwerbungsmaschine nach einem der Ansprüche 1 bis 10, dadurch gekennzeichnet, daß die an den Mittelträger (7) angrenzenden Seitenträger (8,10) in der Transportstellung jeweils durch eine mechanische Verriegelung (26) verriegelbar sind.

12. Heuwerbungsmaschine nach Anspruch 11, dadurch gekennzeichnet, daß die mechanische Verriegelung (26) bei Erreichen der Transportstellung selbsttätig in Verriegelungsstellung gelangt und vom Traktorsitz aus entriegelbar sind.

13. Heuwerbungsmaschine nach einem der Ansprüche 1 bis 12, dadurch gekennzeichnet, daß die äußersten Seitenträger (9,11) mit den jeweiligen Kreiselrechen (15,17) in ihrer eingeklappten Transportstellung zusätzlich durch Stützen (27) abstützbar sind.

14. Heuwerbungsmaschine nach einem der Ansprüche 1 bis 13, dadurch gekennzeichnet, daß bei einem achtkreiseligen Kreiselzettwender in Transportstellung der äußerste Seitenträger (38) der einen Maschinenhälfte in eine etwa lotrechte Stellung hinter die übrigen Seitenträger und das äußerste Seitenträgerteil (46) der anderen Maschinenhälfte um etwa 180° in eine Stellung unter seinen benachbarten Seitenträger (37) schwenkbar ist.

15. Heuwerbungsmaschine nach Anspruch 14, dadurch gekennzeichnet, daß der Kreiselzettwender in Transportstellung über am Tragrahmen (5) der Maschine befestigbare Laufrollen (56) zusätzlich auf dem Boden abstützbar ist.

16. Heuwerbungsmaschine nach Anspruch 15, dadurch gekennzeichnet, daß jede Laufrolle (56) um eine Hochachse (57) pendelnd angeordnet ist.

17. Heuwerbungsmaschine nach Anspruch 15 und 16, dadurch gekennzeichnet, daß die Laufrollen (56) zum Tragrahmen (5) der Maschine höheneinstellbar sind.

18. Heuwerbungsmaschine nach einem oder mehreren der Ansprüche 15 bis 17, dadurch gekennzeichnet, daß jede Laufrolle (56) über ein Parallelogramm (54) mit dem Tragrahmen (5) der Maschine verbunden ist.

19. Heuwerbungsmaschine nach Anspruch 18, dadurch gekenn-zeichnet, daß jedes Parallelogramm (54) durch einen hydraulischen Stellzylinder (55) vom Traktor (1) aus verstellbar ist.

## Claims

1. Haymaking machine, especially rotary tedder and rake, with at least six rotary rakes radially turning around vertical axis (12,13,14,15,16,17) which are supported on a cross carrier (6). This carrier encompasses a centre beam (7) to be hooked on or fitted to a tractor (1) with two centre rotary rakes (12,13) and further side carriers (8,9,10,11) each with another rotary rake (14,15,16,17) linked to the rotary rakes on both sides and articulated between each other, the side carriers (8,9,10,11) hinging upward from their operation position into a machine width reducing transport position, characterised in that at least the swivel axles (20,22) of the side carriers (10,11) adjacent to the centre carrier from an angle (α).

2. Haymaking machine according to claim 1, characterised in that the swivel axles (20,21) of the side carriers (8,9) adjacent to the centre carrier in the first machine half run in planes parallel to the travelling direction, and that the swivel axles (20,21) of the second machine half are arranged at an angle in relation to the swivel axles (20,21) of the first machine half such that at least one of each of the outer side carriers (9,11) forms a sharp angle (α) with a first plane (24) which is defined by the rotary axles of the rotary rakes (12,13) supported on centre carrier (7).

3. Haymaking machine according to claim 2, characterised in that the swivel axes (22,23) for the side carriers (10,11) of the first machine half form an angle (σ1) of a first size opening towards the travelling direction (F) with a second plane (34) which ex:ends vertically in relation to the first plane (24), and that the swivel axles (20,21) for the side carriers (8,9) of the other machine half form an equiaxed angle (σ2) of a second size with the second plane (34) or an angle (δ) opening against the travelling direction.

4. Haymaking machine according to claim 2, characterised in that the swivel axles (20,21) for the side carriers (8,9) of the one machine half run in a plane (34) and that at least the swivel axle (23) of the outer side carrier (11) of the other machine half forms an angle (σ1) with plane (34).

5. Haymaking machine according to claim 4, characterised in that the swivel axle (31) of an outer side carrier (11) forms a sharp angle (β1, β2) in relation to swivel axle (30) of its side carrier (10) adjacent inside not only with plane (34) but also with a plane (35) running cross to the travelling direction.

6. Haymaking machine according to claim 4, characterised in that the swivel axle (31) of an outer side carrier (11) in relation to the swivel axle (30) of its adjacent inner side carrier (10) is aligned such that, when in transport position, the outer side carrier (11) grips behind the outer side carrier (9) of the other machine half.

7. Haymaking machine according to one of claims 1 to 6, characterised in that -when in transport position - at least one outer side carrier (11) extends at an angle of approx. 90° in relation to its inner side carrier (10) next to it.

8. Haymaking machine according to one of claims 1 to 7, characterised in that hydraulic positioning cylinders (32,33) intended to swivel the side carriers (8,9,10,11) engage at the centre carrier (7) on the one hand and on the side carriers (9,11) on the other hand.

9. Haymaking machine according to one of claims 1 to 8, characterised in that only one positioning cylinder (32,33) is provided on each machine half to lift out the side carriers (8,9,10,11).

10. Haymaking machine according to claim 8 or 9, characterised in that the hydraulic positioning cylinders (32,33) are switched in parallel such that the side carriers (8,9,10,11) of both machine halves can be simultaneously lifted.

11. Haymaking machine according to one of claims 1 to 10, characterised in that each of the side carriers (8,10) adjacent to centre carrier (7) is, when in transport position, lockable by a mechanical locking device (26).

12. Haymaking machine according to claim 11, characterised in that the mechanical locking device (26) automatically reaches its locked position once having arrived at its transport position, and can be unlocked from the driver's seat.

13. Haymaking machine according to one of claims 1 to 12, characterised in that the outer side carriers (9,11) together with the related rotary rakes (15,17) can - when in folded-in transport position - be additionally supported by supports (27).

14. Haymaking machine according to one of claims 1 to 13, characterised in that, in case of a rotary tedder and rake, the outer side carrier (39) of the one machine half, when in transport position, can be swivelled into an approximately perpendicular position behind the other side carriers, and that the outer side carrier section (46) of the other machine half can be swivelled through approx. 180° into a position underneath its adjacent side carrier (37).

15. Haymaking machine according to claim 14, characterised in that the rotary tedder and rakes when in transport position, can be additionally supported on the ground by means of running rollers (56) fitted to carrier frame (5).

16. Haymaking machine according to claim 15, characterised in that the way of mounting each running roller (56) allows a pendulum movement around a vertical axle (57).

17. Haymaking machine according to claim 15 and 16, characterised in that the way of mounting the running rollers (56) allows their height setting in relation to the carrier frame (5) of the machine.

18. Haymaking machine according to one or several of claims 15 to 17, characterised in that each running roller (56) is connected to the carrier frame (5) of the machine by means of a parallelogram (54).

19. Haymaking machine according to claim 18, characterised in that each parallelogram (54) can be adjusted through a hydraulic positioning cylinder (55) from the tractor.

## Revendications

1. Machine pour récolter du foin, notamment faneuse rotative comportant au moins six râteaux rotatifs (12, 13, 14, 15, 16, 17) tournant autour d'axes surélevés, et portés par une partie transversale (6) comprenant une poutre centrale (7) qui s'attelle ou se monte sur un tracteur (1) et porte au moins deux râteaux rotatifs centraux (12, 13) ainsi que des poutres latérales (8, 9, 10, 11), articulées entre elles et articulées aux deux extrémités de la poutre centrale, chacune des poutres latérales portant un autre râteau rotatif (14, 15, 16, 17), les poutres latérales (8, 9, 10, 11) pouvant être rabattues de leur position de fonctionnement dans une position de transport réduisant la largeur de la machine,
caractérisée en ce qu'
au moins les axes de pivotement (22, 23) des poutres latérales (10, 11) adjacentes à la poutre centrale font entre eux un angle (α).

2. Machine pour récolter le foin selon la revendication 1,
caractérisée en ce que
les axes de pivotement (20, 21) des poutres latérales (8, 9) de la première moitié de machine sont situés dans des plans parallèles à la direction de déplacement et les axes de pivotement (20, 21) de la seconde moitié de machine sont inclinés par rapport aux axes de pivotement (8, 9) de la première moitié de machine pour qu'au moins l'une des poutres latérales (9, 11) respectivement à l'extérieur forme un angle aigu (α) avec un premier plan (24) défini par les axes de rotation des râteaux rotatifs (12, 13) portés par la poutre centrale (7).

3. Machine pour récolter le foin selon la revendication 2,
caractérisée en ce que
les axes de pivotement (22, 23) des poutres latérales (10, 11) de la première moitié de la machine forment avec un second plan (34) perpendiculaire au premier plan (24), un angle ouvert (σ1) dans la direction de déplacement (F), cet angle ayant une première valeur et les axes de pivotement (20, 21) des poutres latérales (8, 9) de l'autre moitié de machine forment avec le second plan (34) un angle (σ2) de même direction et d'une seconde valeur ou un angle (δ) s'ouvrant dans la direction de déplacement opposée.

4. Machine selon la revendication 2,
caractérisée en ce que
les axes de pivotement (20, 21) des poutres latérales (8, 9) d'une moitié de machine sont situés dans plan (34) et au moins les axes de pivotement (23) de la poutre latérale (11) la plus à l'extérieur de l'autre moitié de machine forment un angle (σ1) avec le plan (34).

5. Machine selon la revendication 4,
caractérisée en ce que
l'axe de pivotement (31) d'une poutre latérale (11) la plus à l'extérieur forme avec l'axe de pivotement (30) de la poutre latérale (10) adjacente à l'intérieur, un angle aigu (β1, β2) à la fois par rapport au plan (34) et par rapport au plan (35) transversal par rapport à la direction de déplacement.

6. Machine selon la revendication 4,
caractérisée en ce que
l'axe de pivotement (31) d'une poutre latérale (11) la plus à l'extérieur est aligné avec l'axe de pivotement (30) d'une poutre latérale (10) adjacente à l'intérieur, de façon qu'en position de transport la poutre latérale (11) la plus à l'extérieur vient prendre derrière l'autre poutre latérale la plus à l'extérieur de l'autre moitié de machine.

7. Machine selon l'une des revendications 1 à 6,
caractérisée en ce qu'
en position de transport, au moins une poutre latérale (11) située à l'extérieur fait un angle d'environ 90° par rapport à la poutre latérale (10) adjacente à l'intérieur.

8. Machine selon l'une des revendications 1 à 7,
caractérisée en ce que
des vérins d'actionnement hydrauliques (32, 33) servant à basculer la poutre latérale (8, 9 ; 10, 11) agissent par une extrémité contre la poutre centrale (7) et par l'autre extrémité contre les poutres latérales (9, 11).

9. Machine selon l'une des revendications 1 à 8,
caractérisée en ce qu'
elle ne comporte qu'un vérin d'actionnement (32, 33) pour le débattement des poutres latérales (8, 9 ; 10, 11) de chaque moitié de machine.

10. Machine selon la revendication 8 ou 9,
caractérisée en ce que
les vérins d'actionnement hydrauliques (32, 33) sont branchés en parallèle pour soulever en même temps les poutres latérales (8, 9 ; 10, 11) des deux moitiés de machine.

11. Machine selon l'une des revendications 1 à 10,
caractérisée en ce que
les poutres latérales (8, 10) adjacentes à la poutre centrale (7), sont verrouillées en position de transport par un moyen de verrouillage mécanique (26).

12. Machine selon la revendication 11,
caractérisée en ce que
le verrouillage mécanique (26) arrive automatiquement en position de verrouillage lorsqu'on atteint la position de transport et ce verrou peut se déverrouiller à partir du siège du conducteur du tracteur.

13. Machine selon l'une des revendications 1 à 12,
caractérisée en ce que
les poutres latérales extérieures (9, 11) avec les râteaux rotatifs (15, 17) respectifs, peuvent être soutenues en plus par des appuis (27) en position de transport, rabattue.

14. Machine selon l'une des revendications 1 à 13,
caractérisée en ce que
dans le cas d'une faneuse rotative à huit rotors, en position de transport, les poutres latérales extérieures (38) d'une moitié de machine peuvent être basculées autour d'un axe sensiblement vertical derrière l'autre poutre latérale et la partie de poutre latérale (46) la plus à l'extérieur de l'autre moitié de machine peut être pivotée d'environ 180° dans une position en dessous de la poutre latérale (37) voisine.

15. Machine selon la revendication 14,
caractérisée en ce qu'
en position de transport, les rotors peuvent s'appuyer en plus sur le sol par des galets de roulement (56) qui se fixent au châssis de support (5) de la machine.

16. Machine selon la revendication 15,
caractérisée en ce que
chaque galet de roulement (56) est monté de façon pendulaire autour d'un axe vertical (57).

17. Machine selon la revendication 15 ou 16,
caractérisée en ce que
les galets de roulement (56) peuvent être réglés en hauteur par rapport au châssis (5) de la machine.

18. Machine selon l'une des revendications 15 à 17,
caractérisée en ce que
chaque galet de roulement (56) est relié au châssis de support (5) de la machine par l'intermédiaire d'un parallélogramme (54).

19. Machine selon la revendication 18,
caractérisée en ce que
chaque parallélogramme (54) se règle à partir du tracteur (1) par l'intermédiaire d'un vérin d'actionnement hydraulique (55).
